(19) **Europäisches Patentamt European Patent Office Office européen des brevets**

(11) **EP 2 989 517 B1**

(12) **FASCICULE DE BREVET EUROPEEN**

(45) Date de publication et mention de la délivrance du brevet:
**19.04.2017 Bulletin 2017/16**

(21) Numéro de dépôt: **14720546.2**

(22) Date de dépôt: **22.04.2014**

(51) Int Cl.:
**G21C 17/108** *(2006.01)*    **G21C 7/36** *(2006.01)*
**G21D 3/00** *(2006.01)*    *G21D 3/04* *(2006.01)*
*G01T 3/00* *(2006.01)*    *G05B 23/02* *(2006.01)*

(86) Numéro de dépôt international:
**PCT/EP2014/058134**

(87) Numéro de publication internationale:
**WO 2014/173894 (30.10.2014 Gazette 2014/44)**

(54) **SYSTEME DE CONTROLE COMMANDE DE COEUR DE REACTEUR NUCLEAIRE**

SYSTEM ZUR STEUERUNG EINES KERNREAKTORKERNS

SYSTEM FOR CONTROLLING A NUCLEAR REACTOR CORE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.04.2013 FR 1353794**

(43) Date de publication de la demande:
**02.03.2016 Bulletin 2016/09**

(73) Titulaire: **Commissariat à l'Énergie Atomique et aux Énergies Alternatives 75015 Paris (FR)**

(72) Inventeur: **BAKKALI, Mounir 92190 Meudon (FR)**

(74) Mandataire: **Brevalex 95, rue d'Amsterdam 75378 Paris Cedex 8 (FR)**

(56) Documents cités:
**US-A- 5 098 639    US-A1- 2011 274 230**

- **Stéphane Normand: "HABILITATIO A DIRIGER DES RECHERCHES - INSTRUMENTATION NUCLEAIRE POUR LES SYSTEMES INDUSTRIELS DE MESURE", , 28 février 2012 (2012-02-28), XP055091580, Extrait de l'Internet: URL:http://tel.archives-ouvertes.fr/docs/0 0/67/48/95/PDF/Normand_2010g.pdf [extrait le 2013-12-04]**

**Description**

Domaine technique et art antérieur

L'invention concerne un système de contrôle commande de coeur de réacteur nucléaire.

Le contrôle et la protection du coeur des réacteurs nucléaires des centrales nucléaires sont assurés, à puissance intermédiaire et à forte puissance, à l'aide de détecteurs de neutrons multi-sections distribués sur toute la hauteur du coeur du réacteur. Ils délivrent un courant continu qui mesure le flux neutronique et, en conséquence, la distribution axiale de puissance du coeur du réacteur nucléaire.

Afin de garantir des mesures de puissance correctes, une procédure de remplacement des détecteurs de neutrons est mise en place dès lors que la réponse de ces derniers est modifiée selon un critère prédéterminé.

Cette procédure de remplacement est décrite dans l'article intitulé « Identification of aging and damage of neutron measurement probe of PRN system in Daya Bay nuclear power station » (Hu-Ping; Zhao-Fuyu / Nuclear Power Ingineering, vol.30, n°1, pages 95-99). Le critère choisi pour remplacer les détecteurs est corrélé au vieillissement de ces derniers. Ce critère ne permet pas, cependant, de définir avec fiabilité une limite réelle de bon fonctionnement des détecteurs. Par ailleurs, cette procédure de contrôle impose, pour mesurer le critère de bon fonctionnement, une déconnection de la chaîne nucléaire.

Le document de Stéphane Normand, "HABILITATIO A DIRIGER DES RECHERCHES - INSTRUMENTATION NUCLEAIRE POUR LES SYSTEMES INDUSTRIELS DE MESURE", 17 novembre 2010, XP055091580, divulgue un système contrôle commande selon le préambule de la revendication 1.

Le système de contrôle commande de l'invention ne présente pas les inconvénients mentionnés ci-dessus.

Exposé de l'invention

En effet, l'invention concerne un système de contrôle commande de coeur de réacteur nucléaire, caractérisé en ce qu'il comprend :

- N chambres à fission $CF_i$ (i=1, 2, ..., N) positionnées le long du coeur de réacteur nucléaire, N étant un nombre entier supérieur ou égal à 2, chaque chambre à fission délivrant un courant représentatif d'une détection de neutrons provenant du coeur du réacteur nucléaire,
- des moyens de conversion en tension aptes à convertir en tensions les courants représentatifs des détections de neutrons,
- des moyens de conversion analogique/numérique aptes à numériser, simultanément, sous l'action d'un même signal d'horloge, les tensions délivrées par les moyens de conversion en tension,
- des moyens de calcul aptes à calculer une valeur d'estimation statistique du flux neutronique d'ordre n $\widehat{K_{n_{CFi}}}$ de chaque chambre à fission $CF_i$ (i=1, 2, ..., N) et une valeur moyenne d'estimation du flux neutronique $\overline{\widehat{K_n}}$ qui représente le flux neutronique moyen régnant au sein du coeur du réacteur nucléaire , telle que

$$\overline{\widehat{K_n}} = \frac{1}{N} \sum_{i=1}^{N} \widehat{K_{n_{CFi}}}$$

et

- des moyens de calcul aptes à calculer un indicateur de vieillissement de la chambre à fission $CF_i$ (i=1, 2, ..., N) à partir de la valeur d'estimation statistique du flux neutronique $\widehat{K_{n_{CFi}}}$.

La valeur d'estimation statistique du flux neutronique d'ordre n, $\widehat{K_{n_{CFi}}}$, de la chambre à fission $CF_i$ est, par définition, l'estimateur du cumulant d'ordre n (« *n order cumulant estimator* » en langue anglaise) associé à la chambre à fission $CF_i$.

Les moyens aptes à calculer un indicateur de vieillissement d'une chambre à fission $CF_i$ comprennent :

- des moyens de calcul aptes à calculer une variance $Var\left(\widehat{K_{n_{CFi}}}\right)$ telle que :

$$Var\left(\widehat{K_{n_{CFi}}}\right) = \frac{1}{K}\sum_{j=1}^{K}\widehat{K_{n_j}}_{CFi}^{\,2} - (\overline{\widehat{K_{n}}}_{CFi})^2\ ;$$

avec

$$\overline{\widehat{K_n}}_{CFi} = \frac{1}{K}\sum_{j=1}^{K}\widehat{K_{n_j}}_{CFi}$$

où *K* est un nombre de valeurs d'estimation choisi pour le calcul de la variance et pour le calcul de la moyenne des valeurs d'estimation statistique de flux neutronique associée à chaque chambre à fission $CF_i$ (i=1, 2, ..., N).

- des moyens de calcul aptes à calculer, à partir de la variance $Var\left(\widehat{K_{n_{CFi}}}\right)$, une grandeur $\sigma_{\widehat{\lambda}_{\widehat{K_{n_{CFi}}}}}\%$ qui est l'écart-type relatif en pourcentage de l'estimateur du taux de comptage associé à la valeur d'estimation du flux neutronique $\widehat{K_{n_{CFi}}}$ de la chambre à fission $CF_i$, telle que :

$$\sigma_{\widehat{\lambda}_{\widehat{K_{n_{CFi}}}}}\% = 100.\sqrt{\frac{Var(\hat{\lambda}_{n_i})}{\lambda^2}},$$

avec

$$Var(\hat{\lambda}_{n_i}) = \frac{Var\left(\widehat{K_{n_{CFi}}}\right)}{\left(\int_0^\infty h_i(t)^n.dt\right)^2}\ ,$$

et

$$\hat{\lambda}_{n_i} = \frac{\widehat{K_{n_{CFi}}}}{\int_0^\infty h_i(t)^n.dt}$$

où

$h_i(t)$ est la réponse impulsionnelle théorique moyenne de la chambre à fission *CFi,* et
$\hat{\lambda}_{n_i}$ est l'estimateur du taux de comptage λ associé au cumulant d'ordre n et à la chambre *CFi,* et

- des moyens de comparaison aptes à délivrer l'indicateur de vieillissement sur la base d'une comparaison entre la grandeur $\sigma_{\widehat{\lambda}_{\widehat{K_{n_{CFi}}}}}\%$ et un seuil $\sigma_0$.

Selon une caractéristique supplémentaire de l'invention, l'ordre n est égal à 2 ou 3.

Le système de contrôle commande de l'invention définit avantageusement un indicateur qualitatif objectif sensible à la dégradation liée au vieillissement des chambres à fission.

De façon avantageuse, le suivi de l'évolution et de la dégradation des chambres à fission s'effectue sans déconnecter la chaîne nucléaire et sans complexifier le système. De façon avantageuse, également, l'indicateur de vieillissement de l'invention est formé à partir des valeurs d'estimation du flux neutronique qui sont utilisées, par ailleurs, pour assurer le contrôle et la protection du coeur du réacteur nucléaire.

Brève description des figures

D'autres caractéristiques et avantages de l'invention apparaîtront à la lecture d'un mode de réalisation préférentiel fait en référence aux figures jointes, parmi lesquelles :

- La figure 1 représente la réponse impulsionnelle moyenne mesurée d'une chambre à fission en fonction du vieillissement de la chambre à fission ;
- La figure 2 représente la réponse impulsionnelle théorique moyenne d'une chambre à fission en fonction du vieillissement de la chambre à fission ;
- La figure 3 représente un schéma de principe du système de contrôle commande de l'invention ;
- La figure 4 représente un signal de sortie de chambre à fission modélisé par un processus de Poisson filtré par la réponse impulsionnelle théorique moyenne de la chambre à fission, pour une valeur de vieillissement de 0H ;
- Les figures 5, 6 et 7 représentent des fonctions d'autocorrélation normalisées du signal de sortie d'une chambre à fission en fonction du vieillissement ;
- Les figures 8 et 9 représentent des courbes qui simulent l'évolution de la grandeur $\sigma_{\widehat{\lambda}_{\widehat{Kn_{CFi}}}}$ % en fonction du taux de comptage $\lambda$ dans le cas où n est respectivement égal à 2 et à 3.

Sur toutes les figures, les mêmes références désignent les mêmes éléments.

Exposé détaillé d'un mode de réalisation particulier de l'invention

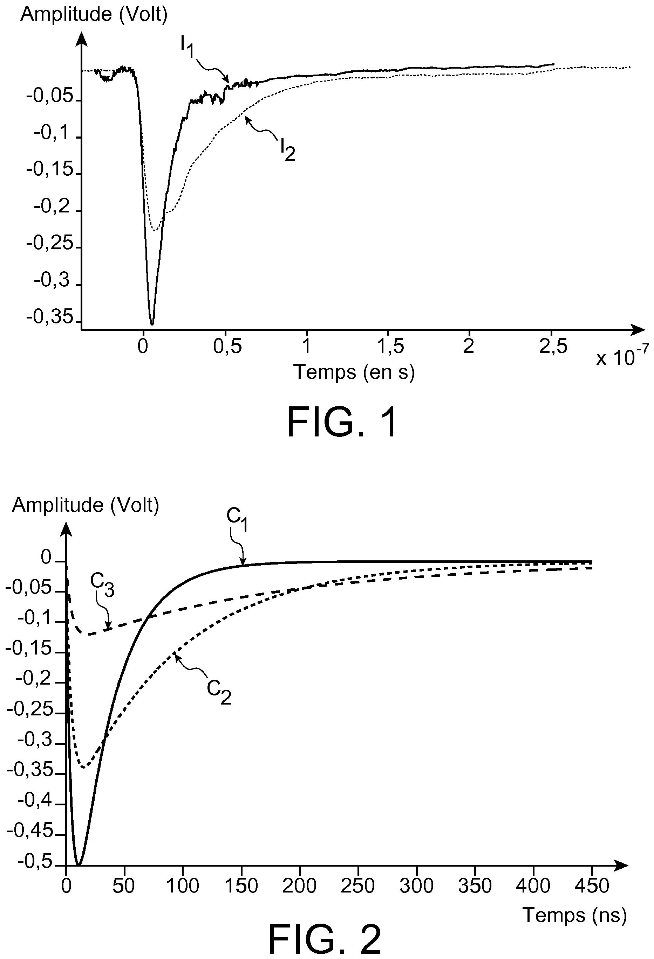

La figure 1 représente, à titre d'exemple non limitatif, la réponse impulsionnelle moyenne mesurée d'une chambre à fission exposée à un flux neutronique de $10^{14}$ n.cm$^{-2}$.s$^{-1}$ en fonction du vieillissement de la chambre à fission.

Le vieillissement du détecteur engendre une modification de forme de la réponse impulsionnelle. La courbe $I_1$ représente une mesure d'impulsion moyenne de la chambre à fission exposée au flux neutronique après 0 heure de fonctionnement et la courbe $I_2$ représente une mesure d'impulsion moyenne de la même chambre à fission exposée à un flux neutronique de même intensité, après 500 heures de fonctionnement. On observe un élargissement de la réponse impulsionnelle. Cet élargissement de la réponse impulsionnelle est lié au ralentissement de la collecte des charges, lequel ralentissement de collecte est dû à la présence de polluants gazeux (présence d'oxygène et de produits de fission gazeux qui ralentissent la collection des charges au sein de l'espace inter-électrode). Cependant, l'intégrale du signal (i.e. la quantité de charges) est conservée pour une impulsion correspondant à un produit de fission donné d'énergie donnée. Ceci a pour conséquence directe de réduire en valeur absolue l'amplitude de la réponse impulsionnelle.

La figure 2 représente une réponse impulsionnelle théorique moyenne de chambre à fission exposée à un flux neutronique d'intensité donnée, en fonction du vieillissement. La courbe $C_1$ correspond à un vieillissement de 0H, la courbe $C_2$ correspond à un vieillissement de 500H et la courbe $C_3$ correspond à un vieillissement de 2000H.

Pour l'exemple de réponse impulsionnelle théorique moyenne représentée en figure 2, la Demanderesse a choisi de formuler la réponse impulsionnelle théorique moyenne h(t) avec l'équation ci-dessous :

$$h(t) = A\left(e^{-\theta_1 t} - e^{-\theta_2 t}\right),$$

où

- A est le paramètre amplitude de la réponse impulsionnelle théorique moyenne, et
- $\theta_1$ et $\theta_2$ sont des paramètres temporels propres de la réponse impulsionnelle théorique moyenne.

Le tableau 1 ci-dessous regroupe l'ensemble des valeurs choisies pour les paramètres A, $\theta_1$ et $\theta_2$ pour les vieillissements respectifs de 0H, 500 H et 2000 H.

Tableau 1

|  | $A$ | $\theta_1$ | $\theta_2$ |
|---|---|---|---|
| 0 H | 8, 35.10$^{-1}$ $V$ | 2.10$^8 s^{-1}$ | 3,12.10$^7 s^{-1}$ |
| 500 H | 4, 25.10$^{-1}$ $V$ | 2.10$^8 s^{-1}$ | 1,11.10$^7 s^{-1}$ |
| 2000 H | 1, 37.10$^{-1}$ $V$ | 2.10$^8 s^{-1}$ | 5, 55.10$^6 s^{-1}$ |

La comparaison des courbes représentées sur les figures 1 et 2 conduit à constater la pertinence du choix de réponse impusionnelle théorique moyenne fait par la Demanderesse.

Selon d'autres modes de réalisation de l'invention correspondant à l'utilisation d'autres chambres à fission, la réponse inpulsionnelle théorique moyenne peut être fomulée à l'aide d'autres équations.

A titre d'exemple non limitatif, une autre formulation de la réponse impulsionnelle théorique moyenne s'écrit :

$$h(t) = -(a0 + a1*cos(t*w) + b1*sin(t*w) + a2*cos(2*t*w) + b2*sin(2*t*w) + a3*cos(3*t*w) + b3*sin(3*t*w) + a4*cos(4*t*w) + b4*sin(4*t*w) + a5*cos(5*t*w) + b5*sin(5*t*w) + a6*cos(6*t*w) + b6*sin(6*t*w) + a7*cos(7*t*w) + b7*sin(7*t*w) + a8*cos(8*t*w) + b8*sin(8*t*w))$$

avec

$$a0 = -0,005074; \quad a1 = 0,007115; \quad b1 = -0,004424; \quad a2 = -0,001363;$$

$$b2 = 0,004398; \quad a3 = -0,001274; \quad b3 = -0,001514; \quad a4 = 0,0006596;$$

$$b4 = -0,0005217; \quad a5 = 0,000321; \quad b5 = 0,0004012; \quad a6 = -0,0002987;$$

$$b6 = 0,0001253; \quad a7 = -6,404 \ 10^{-5}; \quad b7 = -0,0002095; \quad a8 = 0,0001235;$$

$$b8 = -4,158 \ 10^{-5} \ ;$$

et

$$w = 3,484 \ 10^{+7}$$

De façon générale, dans le cadre de l'invention, le choix de la réponse impulsionnelle théorique moyenne est essentiellement guidé par la modification de forme que subit la réponse impulsionnelle en fonction du vieillissement et non par la forme elle-même de la réponse impulsionnelle. C'est en effet cette modification de forme dont le choix permet l'obtention d'un indicateur de vieillissement de chambre à fission pertinent.

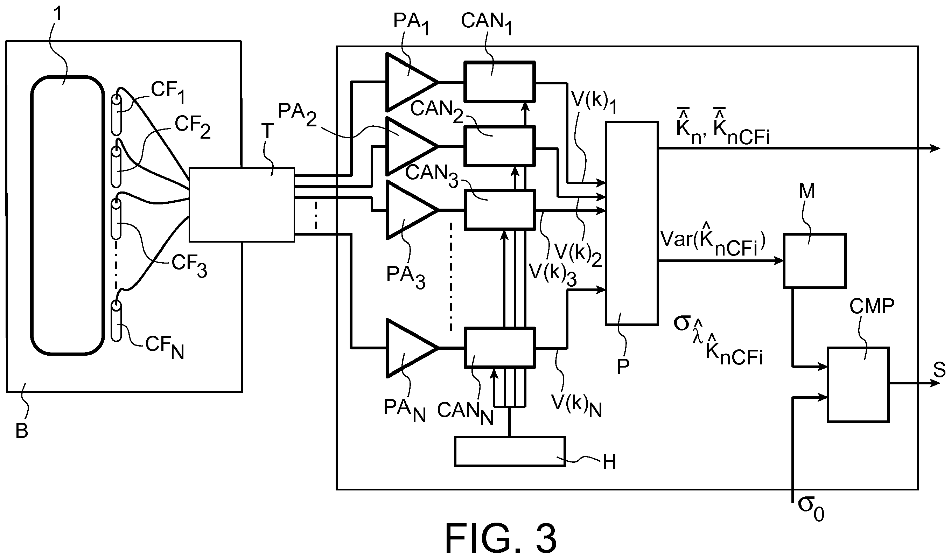

La figure 3 représente un système de contrôle commande de l'invention.

Le système de contrôle commande comprend :

- un ensemble de N chambres à fission $CF_1$, $CF_2$, $CF_3$, ..., $CF_N$ qui délivrent chacune un signal de courant de détection,
- des moyens de liaison T qui comprennent des câbles permettant de déporter l'électronique de traitement des conditions d'ambiance radiologiques qui existent à proximité du coeur du réacteur ;
- des moyens de conversion en tension $PA_1$, $PA_2$, ..., $PA_N$ aptes à convertir et amplifier en tensions les courants de détection délivrés par les chambres à fission,
- des moyens de conversion analogique/numérique $CAN_1$, $CAN_2$, ..., $CAN_N$ aptes à numériser, simultanément, sous l'action d'un même signal d'horloge délivré par un circuit d'horloge H, les tensions délivrées par les moyens de conversion en tension, et
- des moyens de traitement P, M, CMP aptes à traiter les tensions numériques délivrées par les moyens de conversion analogique/numérique.

Les N chambres à fission sont positionnées le long d'un coeur de réacteur 1 placé dans un bâtiment B. Les moyens de liaison T extraient les signaux de courant de détection du bâtiment B. Les N signaux de courant de détection extraits du bâtiment B constituent les signaux d'entrée de N pré-amplificateurs à collecte de courant $PA_1$, $PA_2$, $PA_3$, ..., $PA_N$ qui assurent une conversion courant/tension sur toute la dynamique de puissance du réacteur nucléaire, par exemple une dynamique de 12 décades. Les N signaux de tension qui résultent de la conversion courant/tension sont ensuite numérisés, respectivement, à l'aide de N convertisseurs analogique/numérique $CAN_1$, $CAN_2$, $CAN_3$, ..., $CAN_N$ cadencés simultanément par un même signal d'horloge délivré par le circuit d'horloge H.

Chaque signal de tension numérique $V(k)_i$ (i=1, 2, ..., N) délivré par le convertisseur analogique/numérique $CAN_i$ est constitué d'une succession d'échantillons numériques . Les N signaux de tension numériques $V(k)_1$, $V(k)_2$, $V(k)_3$, ..., $V(k)_N$ délivrés, respectivement, par les N convertisseurs analogique/numérique, constituent les signaux d'entrée du circuit logique programmable P.

Le circuit logique programmable P calcule, pour chaque signal de tension numérique $V(k)_i$ (i=1, 2, ..., N), la valeur d'estimation statistique du flux neutronique $\widehat{K_{n}}_{CFi}$ de la chambre à fission $CF_i$. Ensuite, à partir des N valeurs d'estimation statistique de flux neutronique $\widehat{K_{n}}_{CFi}$ (i=1, 2, 3, ..., N) ainsi calculées, le circuit logique programmable P calcule la valeur moyenne d'estimation du flux neutronique $\overline{\widehat{K_{n}}}$ qui représente le flux neutronique moyen régnant au sein du coeur du réacteur nucléaire. Il vient :

$$\overline{\widehat{K_{n}}} = \frac{1}{N} \sum_{i=1}^{N} \widehat{K_{n}}_{CFi}$$

La valeur d'estimation statistique du flux neutronique $\widehat{K_{n}}_{CFi}$ de la chambre à fission $CF_i$ est, par définition, l'estimateur du cumulant d'ordre n associé à la chambre à fission $CF_i$. Selon le mode de réalisation préférentiel de l'invention, l'ordre n est égal à 2 ou 3.

Les estimateurs des cumulants d'ordre 2 et 3 , $\widehat{K_{2}}_{CFi}$ et $\widehat{K_{3}}_{CFi}$, s'écrivent, respectivement :

$$\widehat{K_{2}}_{CFi} = \frac{1}{N_{ech}(N_{ech} - 1)} \left[ N_{ech} S_{2_i} - S_{1_i}^{2} \right]$$

$$\widehat{K_{3}}_{CFi} = \frac{1}{N_{ech}(N_{ech} - 1)(N_{ech} - 2)} \left[ N_{ech}^{2} S_{3_i} - 3 N_{ech} S_{2_i} S_{1_i} + 2 S_{1_i}^{3} \right]$$

avec :

$$S_{j_i} = \sum_{k=1}^{N_{ech}} (V(k)_i)^{j}$$

où $N_{ech}$ est le nombre d'échantillons numériques choisi, pour assurer la convergence de l'estimateur statistique du flux neutronique (typiquement égal à plusieurs milliers), et
j est un nombre entier.

Les valeurs d'estimation de flux neutronique $\widehat{K_{n}}_{CFi}$ (i=1, 2, 3, ..., N) sont utilisées, de façon connue en soi, pour assurer le contrôle et la protection du coeur du réacteur nucléaire.

Sur la base des valeurs d'estimation statistique du flux neutronique $\widehat{K_{n}}_{CFi}$, le circuit logique programmable P calcule également , pour chaque chambre à fission $CF_i$, la variance $Var\left(\widehat{K_{n}}_{CFi}\right)$ de l'estimateur d'ordre n choisi.

Il vient :

$$Var\left(\widehat{K_{n}}_{CFi}\right) = \frac{1}{K} \sum_{j=1}^{K} \widehat{K_{n_{j}}}_{CFi}^{2} - (\overline{\widehat{K_{n}}}_{CFi})^{2} \ ;$$

avec

$$\overline{\widehat{K_{n}}}_{CFi} = \frac{1}{K}\sum_{j=1}^{K}\widehat{K_{n}}_{j_{CFi}}$$

où K est le nombre de valeurs d'estimation choisi pour le calcul de la variance de l'estimateur statistique du flux neutronique d'ordre n de la chambre à fission $CF_i$.

Pour chaque variance $Var\left(\overline{\widehat{K_{n}}}_{CFi}\right)$ le module de calcul M calcule alors la grandeur $\sigma_{\widehat{\lambda}_{\widehat{K_{n}}_{CFi}}}\%$ qui est l'écart-type relatif en pourcentage de l'estimateur du taux de comptage associé à la valeur d'estimation du flux neutronique $\overline{\widehat{K_{n}}}_{CFi}$ de la chambre à fission $CF_i$. Il vient :

$$\sigma_{\widehat{\lambda}_{\widehat{K_{n}}_{CFi}}}\% = 100.\sqrt{\frac{Var(\hat{\lambda}_{n_i})}{\lambda^2}},$$

avec

$$Var(\hat{\lambda}_{n_i}) = \frac{Var\left(\overline{\widehat{K_{n}}}_{CFi}\right)}{\left(\int_0^\infty h_i(t)^n.dt\right)^2},$$

et

$$\hat{\lambda}_{n_i} = \frac{\overline{\widehat{K_{n}}}_{CFi}}{\int_0^\infty h_i(t)^n.dt}$$

où $h_i(t)$ est la réponse impulsionnelle théorique moyenne de la chambre à fission $CFi$, et $\hat{\lambda}_{n_i}$ est l'estimateur du taux de comptage $\lambda$ associé au cumulant d'ordre n et à la chambre $CF_i$.

Des moyens de comparaison CMP délivrent l'indicateur de vieillissement sur la base d'une comparaison entre la grandeur $\sigma_{\widehat{\lambda}_{\widehat{K_{n}}_{CFi}}}\%$ et un seuil $\sigma_0$.

A cette fin, le comparateur CMP reçoit, sur sa première entrée, l'écart-type en pourcentage $\sigma_{\widehat{\lambda}_{\widehat{K_{n}}_{CFi}}}\%$ et, sur sa deuxième entrée, la valeur de seuil $\sigma_0$. Il résulte de la comparaison entre $\sigma_{\widehat{\lambda}_{\widehat{K_{n}}_{CFi}}}\%$ et $\sigma_0$ un signal de comparaison S qui constitue l'indicateur de vieillissement de la chambre à fission $CF_i$.

Si $\sigma_{\widehat{\lambda}_{\widehat{K_{n}}_{CFi}}}\%$ est supérieur ou égal à $\sigma_0$, il est considéré que la chambre à fission $CF_i$ a dépassé la durée de vieillissement autorisée, et

si $\sigma_{\widehat{\lambda}_{\widehat{K_{n}}_{CFi}}}\%$ est inférieur à $\sigma_0$, il est considéré que la chambre à fission n'a pas atteint sa durée de vieillissement autorisée.

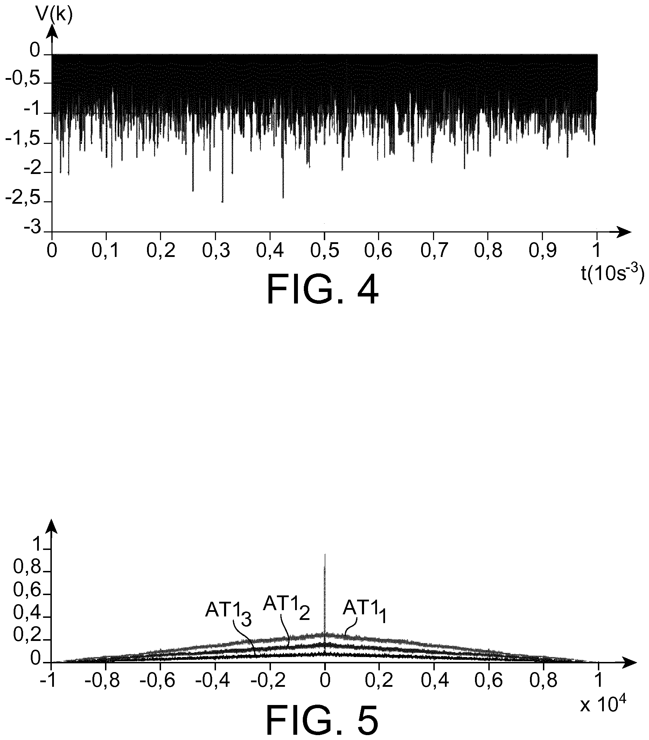

Les figures 5, 6 et 7 représentent des fonctions d'autocorrélation normalisées du signal de sortie d'une chambre à fission en fonction du vieillissement pour différentes valeurs de taux de comptage et pour une fréquence d'échantillionnage Fe du convertisseur analogique numérique CAN égale à 10 MHz.

Le signal de sortie pris en compte pour établir ces courbes d'autocorrélation est modélisé par un processus de Poisson filtré par la réponse impulsionnelle théorique moyenne de la chambre à fission à différentes valeurs de vieillissement (typiquement 0H, 500H et 2000H). La figure 4 représente, à titre d'exemple non limitatif, le signal de sortie numérisé V(k) d'une chambre à fission pour un vieillissement de 0H et un débit de fluence neutronique $\lambda$ égal à $10^7$ Cps

(Cps pour « Coups par seconde »).

Les courbes AT1$_1$, AT1$_2$ et AT1$_3$ de la figure 5 représentent, respectivement, les fonctions d'autocorrélation normalisées du signal de sortie d'une chambre à fission pour les vieillissement respectifs de 0H, 500H et 2000H, dans les conditions suivantes :

- débit de fluence neutronique λ égal à 10$^6$ Cps,
- Fréquence d'échantillonnage Fe du convertisseur analogique numérique CAN égale à 10MHz,
- Durée d'observation 1ms.

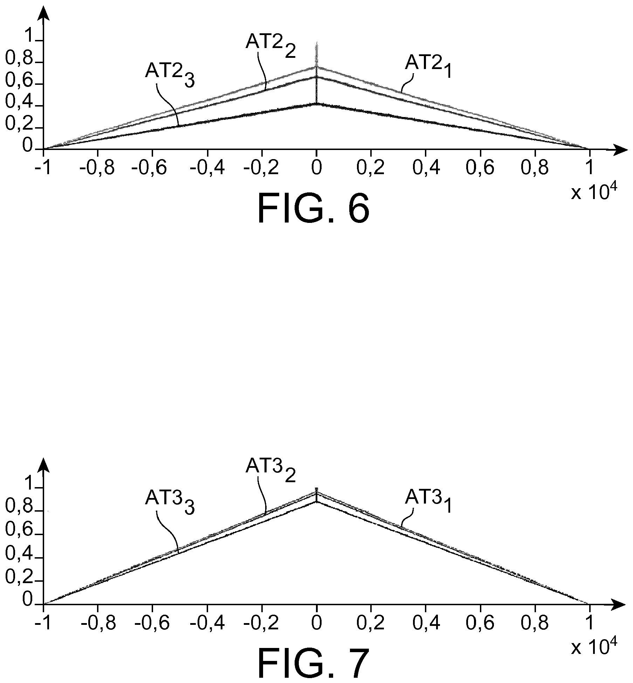

Les courbes AT2$_1$, AT2$_2$ et AT2$_3$ de la figure 6 représentent, respectivement, les fonctions d'autocorrélation normalisées du signal de sortie d'une chambre à fission pour les vieillissement respectifs de 0H, 500H et 2000H, dans les conditions suivantes :

- débit de fluence neutronique λ égal à 10$^7$ Cps,
- Fréquence d'échantillonnage Fe du convertisseur analogique numérique CAN égale à 10 MHz,
- Durée d'observation 1ms.

Les courbes AT3$_1$, AT3$_2$ et AT3$_3$ de la figure 7 représentent, respectivement, les fonctions d'autocorrélation normalisées du signal de sortie d'une chambre à fission pour les vieillissement respectifs de 0H, 500H et 2000H, dans les conditions suivantes :

- débit de fluence neutronique λ égal à 10$^8$ Cps,
- Fréquence d'échantillonnage Fe du convertisseur analogique numérique CAN égale à 10 MHz,
- Durée d'observation 1ms.

Il apparaît, sur les figures 5-7, que la fonction d'autocorrélation normalisée du signal de sortie de chambre à fission augmente très sensiblement en fonction du taux de comptage λ. Par ailleurs, on constate une augmentation supplémentaire de la fonction d'autocorrélation en fonction du vieillissement, laquelle augmentation supplémentaire est imputable à l'évolution de forme de la réponse impulsionnelle théorique moyenne de la chambre à fission liée au vieillissement.

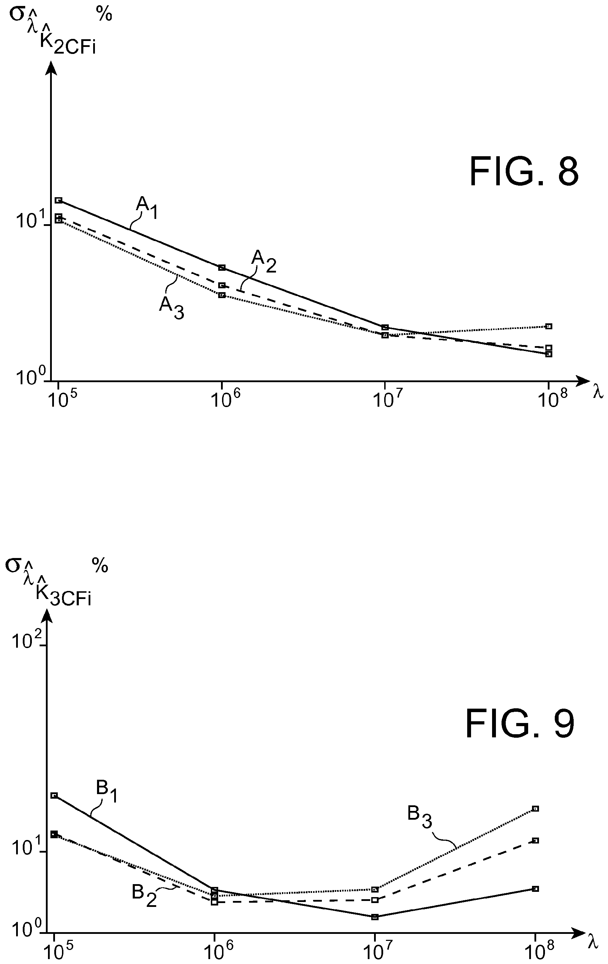

Les figures 8 et 9 représentent des courbes qui simulent des évolutions d'écart-types relatifs en pourcentage délivrés par le système de contrôle commande de l'invention en fonction du taux de comptage.

Les courbes A$_1$, A$_2$ et A$_3$ de la figure 8 représentent, respectivement, l'écart-type relatif en pourcentage de l'estimateur du taux de comptage associé à l'estimateur d'ordre 2, $\sigma_{\widehat{\lambda}_{\widehat{K}_{2CFi}}}$ %, en fonction du taux de comptage λ, pour une chambre à fission CF$_i$, pour les vieillissement respectifs de 0H, 500H et 2000H, dans les conditions suivantes :

- Fréquence d'échantillonnage égale à 10 MHz;
- Durée d'observation 1ms.

Les courbes B$_1$, B$_2$ et B$_3$ de la figure 9 représentent, respectivement, l'écart-type relatif en pourcentage de l'estimateur du taux de comptage associé à l'estimateur d'ordre 3, $\sigma_{\widehat{\lambda}_{\widehat{K}_{3CFi}}}$ % , en fonction du taux de comptage λ, pour une chambre à fission CF$_i$, pour les vieillissements respectifs de 0H, 500H et 2000H, dans les conditions suivantes :

- Fréquence d'échantillonnage égale à 10 MHz;
- Durée d'observation 1ms.

Des courbes 8 et 9, il ressort que la précision de l'estimateur du débit de fluence neutronique varie en fonction du choix de l'estimateur de flux neutronique.

En effet, on observe une dégradation additionnelle de 9,2% de précision du flux neutronique entre 0H et 2000H associée à l'estimateur d'ordre 3 pour un débit de fluence neutronique λ égal à 10$^8$ Cps. En revanche, cette dégradation additionnelle de précision entre 0H et 2000H est de 0,74% associée à l'estimateur d'ordre 2 pour un débit de fluence neutronique λ égal à 10$^8$ Cps. Le choix de l'estimateur de flux neutronique est donc important. Néanmoins, la dégradation additionnelle de précision introduite par l'estimateur d'ordre 2 n'est pas négligeable ramenée, par exemple, à 1% de précision recherchée.

Par ailleurs, les courbes 8 et 9 montrent, pour un même débit de fluence neutronique λ égal à 10$^8$ Cps, un

écart entre les valeurs d'écart-type relatif en pourcentage de l'estimateur du taux de comptage à 0H et à 2000H plus important à l'ordre 3 qu'à l'ordre 2.

Cette différence est liée à la corrélation des échantillons du signal V(k)$_i$, dont l'impact est d'autant plus important que l'ordre retenu pour l'estimateur augmente.

## Revendications

**1.** Système de contrôle commande de coeur de réacteur nucléaire comprenant

- N chambres à fission (CF$_1$, CF$_2$, .... CF$_N$) positionnées le long du coeur de réacteur nucléaire, N étant un nombre entier supérieur ou égal à 2, chaque chambre à fission délivrant un courant représentatif d'une détection de neutrons provenant du coeur de réacteur,
- des moyens de conversion en tension (PA$_1$, PA$_2$, ..., PA$_N$) adaptés pour convertir en tensions les courants représentatifs des détection de neutrons délivrés par les différentes chambres à fission,
- des moyens de conversion analogique/numérique (CAN$_1$, CAN$_2$, ..., CAN$_N$) adaptés pour numériser, simultanément, sous l'action d'un même signal d'horloge, les tensions délivrées par les moyens de conversion en tension, **caractérisé en ce que** le système de contrôle commande comprend aussi

- des moyens de calcul (P) adaptés pour calculer une valeur d'estimation statistique du flux neutronique d'ordre n $\widehat{K_{n_{CFi}}}$ de chaque chambre à fission (CF$_i$) et une valeur moyenne d'estimation du flux neutronique $\widehat{K_n}$ qui représente le flux neutronique moyen régnant au sein du coeur du réacteur nucléaire telle que

$$\overline{\widehat{K_n}} = \frac{1}{N} \sum_{i=1}^{N} \widehat{K_{n_{CFi}}}$$

- des moyens (M, CMP) adaptés pour calculer un indicateur de vieillissement (S) de chambre à fission (CF$_i$) à partir de la valeur d'estimation statistique du flux neutronique $\widehat{K_{n_{CFi}}}$ de la chambre à fission (CF$_i$), les moyens adaptés pour calculer un indicateur de vieillissement S d'une chambre à fission (CF$_i$) à partir de la valeur d'estimation statistique du flux neutronique $\widehat{K_{n_{CFi}}}$ de la chambre à fission (CF$_i$) comprenant :

- des moyens de calcul adaptés pour calculer une variance $Var\left(\widehat{K_{n_{CFi}}}\right)$ telle que:

$$Var\left(\widehat{K_{n_{CFi}}}\right) = \frac{1}{K} \sum_{j=1}^{K} \widehat{K_{n_{j_{CFi}}}}^2 - (\overline{\widehat{K_{n_{CFi}}}})^2 \; ;$$

avec

$$\overline{\widehat{K_{n_{CFi}}}} = \frac{1}{K} \sum_{j=1}^{K} \widehat{K_{n_{j_{CFi}}}}$$

où $K$ est un nombre de valeurs d'estimation choisi pour le calcul de ladite variance de l'estimateur statistique du flux neutronique d'ordre n de la chambre à fission (CF$_i$),

- des moyens de calcul adaptés pour calculer, à partir de la variance $Var\left(\widehat{K_{n_{CFi}}}\right)$, une grandeur $\sigma_{\widehat{\lambda_{\widehat{K_{n_{CFi}}}}}}$ % qui est l'écart-type relatif en pourcentage de l'estimateur du taux de comptage associé à la valeur d'estimation du flux neutronique $\widehat{K_{n_{CFi}}}$ de la chambre à fission (CF$_i$) :

$$\sigma_{\hat{\lambda}_{\widehat{K_n}_{CFi}}} \% = 100. \sqrt{\frac{Var(\hat{\lambda}_{n_i})}{\lambda^2}},$$

avec

$$Var(\hat{\lambda}_{n_i}) = \frac{Var(\widehat{K_n}_{CFi})}{\left(\int_0^\infty h_i(t)^n.dt\right)^2},$$

et

$$\hat{\lambda}_{n_i} = \frac{\widehat{K_n}_{CFi}}{\int_0^\infty h_i(t)^n.dt}$$

où

$h_i(t)$ est la réponse impulsionnelle théorique moyenne de la chambre à fission ($CF_i$), et
$\hat{\lambda}_{n_i}$ est l'estimateur du taux de comptage $\lambda$ associé au cumulant d'ordre n et à la chambre à fission ($CF_i$),

- des moyens de comparaison (CMP) adaptés pour délivrer l'indicateur de vieillissement S sur la base d'une comparaison entre l'écart-type relatif en pourcentage $\sigma_{\hat{\lambda}_{\widehat{K_n}_{CFi}}} \%$ et un seuil $\sigma_0$.

2. Système de contrôle commande de coeur de réacteur nucléaire selon la revendication 1, dans lequel l'ordre n est égal à 2 ou 3.

**Patentansprüche**

1. Atomreaktor-Kern-Steuer-/Regelsystem, umfassend

- N Spaltkammern ($CF_1$, $CF_2$, ..., $CF_N$), die entlang des Atomreaktor-Kerns angeordnet sind, wobei N eine ganze Zahl größer oder gleich 2 ist, wobei jede Spaltkammer einen Strom liefert, der repräsentativ für eine Detektion von Neutronen ist, die von dem Reaktorkern stammen,
- Mittel zur Spannungsumwandlung ($PA_1$, $PA_2$, ..., $PA_N$), die dazu angepasst sind, die für die Detektion von Neutronen repräsentativen Ströme, die von den verschiedenen Spaltkammern geliefert werden, in Spannungen umzuwandeln,
- Mittel zur Analog/Digital-Umwandlung ($CAN_1$, $CAN_2$, ..., $CAN_N$), die dazu angepasst sind, unter der Wirkung eines gleichen Taktsignals simultan die durch die Mittel zur Spannungsumwandlung gelieferten Spannungen zu digitalisieren, **dadurch gekennzeichnet, dass** das Steuer-/Regelsystem weiterhin umfasst:
  - Berechnungsmittel (P), die dazu angepasst sind, einen statistischen Schätzwert des Neutronenflusses der Ordnung n, $\widehat{K_n}_{CFi}$, von jeder Spaltkammer ($CF_i$) zu berechnen, und einen mittleren Schätzwert des Neutronenflusses $\widehat{K_n}$, der den mittleren Neutronenfluss darstellt, welcher im Inneren des Kerns des Atomreaktors herrscht, so dass

$$\widehat{K_n} = \frac{1}{N}\sum_{i=1}^{N} \widehat{K_n}_{CFi}$$

- Mittel (M, CMP), die dazu angepasst sind, einen Alterungsindikator (S) der Spaltkammer (CF$_i$) zu berechnen, ausgehend von dem statistischen Schätzwert des Neutronenflusses $\widehat{K_{n_{CFi}}}$ der Spaltkammer (CF$_i$), wobei die Mittel, die dazu angepasst sind, einen Alterungsindikator S einer Spaltkammer (CF$_i$) ausgehend von dem statistischen Schätzwert des Neutronenflusses $\widehat{K_{n_{CFi}}}$ der Spaltkammer (CF$_i$) zu berechnen, umfassen:

- Berechnungsmittel, die dazu angepasst sind, eine Varianz $Var\left(\widehat{K_{n_{CFi}}}\right)$ zu berechnen, so dass

$$Var\left(\widehat{K_{n_{CFi}}}\right) = \frac{1}{K}\sum_{j=1}^{K}\widehat{K_{n_{j_{CFi}}}}^{2} - (\overline{\overline{\widehat{K_{n_{CFi}}}}})^2$$

mit

$$\overline{\overline{\widehat{K_{n_{CFi}}}}} = \frac{1}{K}\sum_{j=1}^{K}\widehat{K_{n_{j_{CFi}}}}$$

wobei K eine Anzahl von Schätzwerten ist, die ausgewählt ist für die Berechnung der Varianz der statistischen Schätzfunktion des Neutronenflusses der Ordnung n der Spaltkammer (CF$_i$)

- Berechnungsmittel, die dazu angepasst sind, ausgehend von der Varianz $Var\left(\widehat{K_{n_{CFi}}}\right)$ eine Größe $\sigma_{\hat{\lambda}_{\widehat{K_{n_{CFi}}}}}\%$ zu berechnen, welche die relative Standardabweichung in Prozent der Schätzfunktion der Zählrate ist, die dem Schätzwert des Neutronenflusses $\widehat{K_{n_{CFi}}}$ der Spaltkammer (CF$_i$) zugeordnet ist:

$$\sigma_{\hat{\lambda}_{\widehat{K_{n_{CFi}}}}}\% = 100.\sqrt{\frac{Var\left(\hat{\lambda}_{n_i}\right)}{\lambda^2}},$$

mit

$$Var\left(\hat{\lambda}_{n_i}\right) = \frac{Var\left(\widehat{K_{n_{CFi}}}\right)}{\left(\int_0^\infty h_i(t)^n.dt\right)^2},$$

und

$$\hat{\lambda}_{n_i} = \frac{\widehat{K_{n_{CFi}}}}{\int_0^\infty h_i(t)^n.dt}$$

wobei $h_i(t)$ die theoretische mittlere Impulsantwort der Spaltkammer (CF$_i$) ist, und $\hat{\lambda}_{n_i}$ die Schätzfunktion der Zählrate $\lambda$ ist, die der Kumulante der Ordnung n und der Spaltkammer (CF$_i$) zugeordnet ist,
- Vergleichsmittel (CMP), die dazu angepasst sind, den Alterungsindikator S zu liefern, auf der Grundlage eines Vergleiches zwischen der relativen Standardabweichung in Prozent $\sigma_{\hat{\lambda}_{\widehat{K_{n_{CFi}}}}}\%$ und einem Schwellenwert $\sigma_0$.

**2.** Atomreaktor-Kern-Steuer-/Regelsystem nach Anspruch 1, wobei die Ordnung n gleich 2 oder 3 ist.

**Claims**

1. Control system for monitoring and controlling a nuclear reactor core, comprising:

- N fission chambers ($CF_1$, $CF_2$,... $CF_N$) positioned along the nuclear reactor core, N being an integer number greater than or equal to 2, each fission chamber delivering a current representing a detection of neutrons coming from the core of the nuclear reactor,
- voltage conversion means ($PA_1$, $PA_2$, ..., $PA_N$) adapted to convert into voltages the currents representing the detections of neutrons delivered by the various fission chambers,
- analogue to digital conversion means ($CAN_1$, $CAN_2$, ..., $CAN_N$) adapted to digitise, simultaneously, under the action of the same clock signal, the voltages delivered by the voltage conversion means,

**characterized in that** the control system also comprises:

- computing means (P) adapted to compute a statistical estimation of the nth order neutron flux $\widehat{K_n}_{CFi}$ of each fission chamber ($CF_i$) and a mean value of estimation of the neutron flux $\overline{\widehat{K_n}}$ that represents the mean neutron flux prevailing in the core of the nuclear reactor, such that

$$\overline{\widehat{K_n}} = \frac{1}{N} \sum_{i=1}^{N} \widehat{K_n}_{CFi}$$

- means (M, CMP) adapted to compute an ageing indicator (S) of the fission chamber ($CF_i$) from the statistical estimation value of the neutron flux $\widehat{K_n}_{CFi}$ of the fission chamber ($CF_i$), the means adapted to compute an ageing indicator (S) of a fission chamber ($CF_i$) from the statistical estimation value of the neutron flux $\widehat{K_n}_{CFi}$ of the fission chamber ($CF_i$) comprising:

- computing means adapted to calculate a variance $Var\left(\widehat{K_n}_{CFi}\right)$ such that:

$$Var\left(\widehat{K_n}_{CFi}\right) = \frac{1}{K} \sum_{j=1}^{K} \widehat{K_{n_j}}_{CFi}^{\;2} - (\overline{\widehat{K_n}_{CFi}})^2 \; ;$$

with

$$\overline{\widehat{K_n}_{CFi}} = \frac{1}{K} \sum_{j=1}^{K} \widehat{K_{n_j}}_{CFi}$$

where $K$ is an estimation value number chosen for computing said variance of the statistical estimator of the nth order neutron flux of the fission chamber ($CF_i$) ;

- computing means adapted to compute, from the variance $Var\left(\widehat{K_n}_{CFi}\right)$, a quantity $\sigma_{\hat{\lambda}_{\widehat{K_n}_{CFi}}}\%$ that is the relative standard deviation as a percentage of the estimator of the counting rate associated with the estimation value of the neutron flux $\widehat{K_n}_{CFi}$ of the fission chamber ($CF_i$) :

$$\sigma_{\hat{\lambda}_{\widehat{K_n}_{CFi}}}\% = 100.\sqrt{\frac{Var(\hat{\lambda}_{n_i})}{\lambda^2}},$$

with

$$Var\left(\hat{\lambda}_{n_i}\right) = \frac{Var\left(\widehat{K_{n_{CFi}}}\right)}{\left(\int_0^\infty h_i(t)^n.dt\right)^2} \;,$$

and

$$\hat{\lambda}_{n_i} = \frac{\widehat{K_{n_{CFi}}}}{\int_0^\infty h_i(t)^n.dt}$$

where

$h_i(t)$ is the mean theoretical pulse response of the fission chamber ($CF_i$), and
$\hat{\lambda}_{n_i}$ is the estimator of the counting rate $\lambda$ associated with the nth order cumulant and with the chamber ($CF_i$), and

- comparison means (CMP) adapted to deliver the ageing indicator S on the basis of a comparison between the relative standard deviation as a percentage $\sigma_{\hat{\lambda}_{\widehat{K_{n_{CFi}}}}}\%$ and a threshold $\sigma_0$.

2. Control system for monitoring and controlling a nuclear reactor core according to claim 1, in which the nth order is equal to 2 or 3.

FIG. 1

FIG. 2

FIG. 3

EP 2 989 517 B1

FIG. 4

FIG. 5

FIG. 6

FIG. 7

FIG. 8

FIG. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **HU-PING ; ZHAO-FUYU.** Identification of aging and damage of neutron measurement probe of PRN system in Daya Bay nuclear power station. *Nuclear Power Ingineering,* vol. 30 (1), 95-99

- **STÉPHANE NORMAND.** *HABILITATIO A DIRIGER DES RECHERCHES - INSTRUMENTATION NUCLEAIRE POUR LES SYSTEMES INDUSTRIELS DE MESURE,* 17 Novembre 2010